Europäisches Patentamt

European Patent Office

Office européen des brevets

(11) Veröffentlichungsnummer: **0 085 791**
**B1**

(12) **EUROPÄISCHE PATENTSCHRIFT**

(45) Veröffentlichungstag der Patentschrift:
10.04.85

(51) Int. Cl.⁴: **B 01 D 9/00**

(21) Anmeldenummer: **82201411.4**

(22) Anmeldetag: **09.11.82**

(54) Verfahren und Vorrichtung zur Stofftrennung eines flüssigen Gemisches durch fraktionierte Kristallisation.

(30) Priorität: **04.02.82 DE 3203818**

(43) Veröffentlichungstag der Anmeldung:
**17.08.83 Patentblatt 83/33**

(45) Bekanntmachung des Hinweises auf die Patenterteilung:
**10.04.85 Patentblatt 85/15**

(84) Benannte Vertragsstaaten:
**BE DE FR GB IT NL**

(56) Entgegenhaltungen:
**DE - A - 1 769 123**
**DE - A - 1 803 420**
**DE - A - 2 606 364**
**DE - C - 191 341**
**DE - C - 1 084 240**
**DE - C - 1 114 793**
**IT - A - 495 856**
**US - A - 3 218 133**

(73) Patentinhaber: **Rütgerswerke Aktiengesellschaft,
Mainzer Landstrasse 217, D-6000 Frankfurt
a.Main 1 (DE)**

(72) Erfinder: **Stolzenberg, Konrad, Dr., Bahnhofstrasse 26,
D-4355 Waltrop (DE)**
Erfinder: **Koch, Karl Heinz, Dr., Gartenweg 17,
D-4620 Castrop Rauxel (DE)**
Erfinder: **Marrett, Rolf, Eichenweg 17,
D-4620 Castrop-Rauxel (DE)**

## Beschreibung

Die Erfindung betrifft ein Verfahren und eine Vorrichtung zur Stofftrennung eines flüssigen Gemisches durch fraktionierte Kristallisation durch Abscheiden einer Kristallischicht an der Wandung einer gefüllten Kristallisationszone, wobei die flüssige Phase indirekt gekühlt wird und der Stoffübergang aus dünnen Grenzschichten erfolgt, durch Entfernen der restlichen Flüssigkeit und Abschmelzen der Kristallschicht in einer oder mehreren Stufen.

Infolge ständig steigender Energiekosten gewinnen Kristallisationsverfahren für die Stofftrennung neben den vorherrschenden Rektifikationsverfahren zunehmend an Bedeutung.

Es sind zahlreiche Kristallisationsverfahren bekannt, die zwar nicht allgemein, jedoch bei bestimmten Trennproblemen mit Erfolg angewendet werden. Bekannt sind Verfahren, bei denen aus einem Lösungsmittel heraus kristallisiert wird, und solche, bei denen aus einer Schmelze heraus kristallisiert wird.

Dabei lassen sich zwei Gruppen von Verfahrenstypen unterscheiden. Bei der ersten Gruppe wird eine Kristallsuspension erzeugt, die mechanisch durch Filtrieren, Separieren usw. in Kristallgut und Mutterlauge zerlegt werden muss. Bei diesen Verfahren ist der apparative Aufwand sehr hoch, so dass sie sich meist nicht wirtschaftlich durchführen lassen.

Bei der zweiten Gruppe wird eine zusammenhängende Kristallschicht gebildet, was die Trennung zwischen Kristallgut und Mutterlauge vereinfacht. Zwei Wege werden hierbei verwirklicht: die Kristallisation aus einer ruhenden flüssigen Phase und die aus dünnen Grenzschichten einer bewegten flüssigen Phase.

Der erste Weg hat den Nachteil, dass die Trennwirkung der einzelnen Kristallisationsstufe durch eingeschlossene Mutterlauge und dentritisches Kristallwachstum infolge Unterkühlung oft nur gering ist und daher vergleichsweise viele Kristallisationsstufen aufeinander folgen müssen. Dadurch wird eine wirtschaftliche Fahrweise erschwert.

Bei dem zweiten Weg, wie er beispielsweise in der DE-A Nr. 2606364 beschrieben wird, wird durch turbulente Strömung eine dünne Grenzschicht erzeugt, aus der heraus die Kristallschicht an der Wandung der Kristallisationszone gebildet wird. Die Trennwirkung einer einzelnen Stufe ist dabei wesentlich besser.

Der Nachteil dieses Verfahrens ist es, dass die Kristallschicht, inbesondere die an der Oberfläche gerade wachsenden Kristalle, durch die turbulente Strömung hohen fluiddynamischen Kräften ausgesetzt ist. Daher sind diese Verfahren für Kristalle, die nur durch geringe Bindungskräfte an der festen Oberfläche haften oder die zur freien Keimbildung neigen, nicht geeignet. Ferner sind diese Verfahren ungeeignet für die Kristallisation von Stoffen, die vorzugsweise in nadeligen Strukturen kristallisieren, da die Nadeln durch die starken fluiddynamischen Kräfte aus der Kristallschicht abbrechen und zur Bildung von Suspensionen führen.

Weiterhin ist in der DE-A Nr. 1769123 ein Verfahren beschrieben, bei dem das flüssige Gemisch als Rieselfilm über die Kühlflächen geleitet wird. Es eignet sich gut für die Reinigung von Produkten, die eine feste Kristallschicht mit glatter Oberfläche bilden, nicht aber für solche, die eine weiche Kristallschicht mit rauher Oberfläche bilden.

Ein weiterer Nachteil dieser bekannten Verfahren besteht darin, dass zur Vermeidung von ungewollter Krustenbildung eine Begleitbeheizung für die Umlenk- und Förderrohre sowie die Förderorgane vorgesehen werden muss, wobei die Temperatur der flüssigen Phase Werte oberhalb des metastabilen Bereiches der Kristallisation erreicht. Diese zugeführte Wärme muss zusätzlich über die Kühlflächen des Kristallers aus der flüssigen Phase wieder abgeführt werden, was zu unwirtschaftlichen Verlängerungen des Prozesses führt. Zusätzlich entstehen durch das Einleiten der erwärmten flüssigen Phase Kristallschichten ungleichmässiger Dicke im Einlaufgebiet des Kristallers (trichterförmige Kristallschichten). Dieses führt zu einer Verschlechterung der Raum-Zeit-Ausbeute. Gelegentlich werden auch dadurch die Kristallisationsapparate verstopft.

Theoretischen und experimentellen Untersuchungen zufolge wird die effektive Trennleistung bei der Kristallisation vor allem durch die Kristallisationsgeschwindigkeit und durch die Diffusionsverhältnisse in der stationären oder laminar strömenden Grenzschicht an der Phasengrenzfläche bestimmt. Um die Grenzschichtdicke zu verringern, werden im allgemeinen Förderorgane eingebaut, um die natürliche Konvektion durch eine erzwungene Konvektion zu ergänzen, womit die Kristallisationsgeschwindigkeit der vorliegenden Trennaufgabe angepasst wird.

Zur Vermeidung der Mängel der bekannten Kristallisationsverfahren bestand daher die Aufgabe, ein Verfahren und eine Vorrichtung zu entwickeln, mit denen auch weiche Kristallschichten mit rauhen Oberflächen bildende Stoffe aus dünnen Grenzschichten an gekühlten Flächen mit guter Trennwirkung aus einer Lösung oder Schmelze kristallisiert werden können.

Die Aufgabe wurde erfindungsgemäss durch ein Verfahren gelöst, das dadurch gekennzeichnet ist, dass die dünnen Grenzschichten ohne Umpumpen der flüssigen Phase durch am Boden des Kristallisationsbehälters eingeleitete Gasblasen erzeugt werden, die während ihres Aufstiegs durch die flüssige Phase möglichst dicht an den wärmeabführenden Oberflächen entlangstreichen.

Das erfindungsgemässe Verfahren nutzt die Tatsache aus, dass bei der Zweiphasenströmung, die durch feste Oberflächen zwangsgeführt wird, sich zwischen der Wandoberfläche und der Grenzschicht zwischen der gasförmigen und der flüssigen Phase ein dünner Flüssigkeitsfilm ausbildet. Die Strömungsrichtungen der gasförmigen Phase und des Flüssigkeitsfilms sind entgegengesetzt, wobei durch die instationären Anlaufströmungen sehr dünne Grenzschichten für den Wärme- und den Stofftransport erzeugt werden und die Turbulenzen im Rückströmungsgebiet hinter den Blasen zu einer guten Quervermischung der flüssigen Phase und damit zum Ausgleich von Konzentrationsunterschieden beitragen.

Nach einer besonders vorteilhaften Ausführung des Verfahrens wird die Kristallisation in von aussen gekühlten, senkrecht installierten Rohren durchgeführt, wobei das Gas am unteren Ende in das mit Schmelze oder Lösung gefüllte Rohr eingeleitet wird. Mit dieser Ausführung wird erreicht, dass bei jeder aufsteigenden Gasblase die gesamte Flüssigkeit über den dünnen Flüssigkeitsfilm zwischen Gasblase und Kristallschicht abwärts fliessen muss. Über den Gasvolumenstrom lässt sich in Abhängigkeit vom Rohrdurchmesser die Art der Gasströmung einstellen. Damit lässt sich das Ausmass der fluiddynamischen Beanspruchungen an die Art des kristallisierenden Stoffes anpassen. Der Gasvolumenstrom wird so eingestellt, dass sich zu Beginn der Kristallisation eine Kugelblasenströmung ausbildet, bei der der Durchmesser der Kugelblasen kleiner als der Rohrdurchmesser ist. Durch Koaleszenzen während des Aufstieges der Blasen kommt es zu einer Vergrösserung der Gasblasen und damit zur Ausbildung von Schirm- bzw. Zylinderblasen. Bei fortschreitender Verengung des freien Querschnittes durch die wachsende Kristallschicht erhöht sich der durch die Restschmelze strömende Gasanteil, wodurch sich eine stetige Verbesserung des Wärme- und Stofftransportes einstellt. Auf diese Weise wird dem Anstieg des Wärmeleitwiderstandes durch die wachsende Kristallschicht entgegengewirkt. Bei sehr empfindlichen Kristallen kann die Gasmenge mit fortschreitender Kristallisation auch verringert werden.

Bei Stoffgemischen, die zu sehr empfindlichen Strukturen kristallisieren, ist es vorteilhaft, von Anfang an geringere Gasmengen durch geeignete Düsen so einzuleiten, dass kleine Kugelblasen entstehen, die als Blasenschwarm ohne Koaleszenz aufsteigen. Auf diese Weise wird das Abbrechen von Kristallteilen aus der wachsenden Kristallschicht besonders wirkungsvoll vermieden. Die Art der Blasenströmung und damit die Aufstiegsgeschwindigkeit der Gasblasen wird durch folgende Grössen beeinflusst: Blasendurchmesser, Rohrdurchmesser sowie Dichte, Viskosität und Oberflächenspannung des zu kristallisierenden Stoffgemisches. Die für ein bestimmtes Stoffgemisch jeweils geeignete Blasenströmung lässt sich durch Laborversuche z. B. in einer Glasapparatur ermitteln, bei denen das Koaleszenzverhalten der Blasen und das Ausmass der fluiddynamischen Beanspruchung auf die Kristallschicht in Abhängigkeit von der Blasenart und der Gasleerrohrgeschwindigkeit beobachtet werden kann. Das Hold-up der Gasphase liegt dabei erfahrungsgemäss zwischen 1 und 20 Vol.-%.

Nach dem erfindungsgemässen Verfahren wird die fraktionierte Kristallisation nach bekannter Weise so durchgeführt, dass nach dem Abscheiden der Kristalle an der Wand der Kristallisationszone die restliche Flüssigkeit abgelassen wird, wobei prinzipiell Ausfrierraten bis zu 100% möglich sind, vorzugsweise jedoch zwischen 50 und 95% betragen, und anschliessend durch Temperaturerhöhung die Kristallschicht derart abgeschmolzen wird, dass die Schmelze in einzelnen Fraktionen entnommen werden kann.

Beim Abschmelzen werden aufgrund der Wärmezufuhr die Haftkräfte zwischen Wärmeaustauschfläche und Kristallschicht stark herabgesetzt, was bei herkömmlichen Verfahren zum Abrutschen der gesamten Kristallmasse bzw. zum Verkeilen von Kristallschollen z. B. beim Rieselfilmkristallisator nach der DE-A Nr. 1 769 123 führen kann. Durch die Zentrierstifte 8 des in der Mitte eines jeden Kristallisationsrohres 6 der erfindungsgemässen Vorrichtung installierten Gaseinleitungsrohres 7 wird ein solches Abrutschen in der Weise vermieden, dass die Kristallschicht während des Abschmelzens am Gaseinleitungsrohr 7 hängt, das während des Abschmelzvorganges relativ die kälteste Stelle (über den Querschnitt betrachtet) ist. Dadurch wird der kristallisierte Kern im Kristallisationsrohr 6 am Abrutschen gehindert.

Die Fraktionierung wird in Zyklen durchgeführt, wobei jeder Zyklus aus mehreren Stufen bestehen kann. Die Restschmelze sowie die einzelnen Fraktionen des abgeschmolzenen Kristalles mit geringerer Reinheit eines Zyklus werden jeweils dem Einsatzprodukt der Stufe des folgenden Zyklus zugeführt, die der jeweiligen Konzentration entspricht. Das Restkristall dient mit als Einsatzmaterial für die folgenden Stufen desselben Zyklus. Zum Abschmelzen des Restkristalls kann üblicherweise die gegebenenfalls erwärmte Restschmelze bzw. -lösung der gleichen mittleren Konzentration aus dem vorangegangenen Zyklus verwendet werden.

Die Aufteilung der Stoffströme in jeder Stufe sowie die erforderliche Anzahl der Stufen richtet sich nach der geforderten Ausbeute sowie nach der gewünschten Reinheit des Kristalls der letzten Stufe.

Die mehrstufige fraktionierte Kristallisation kann sukzessive in ein und derselben Anlage erfolgen, wobei die Restschmelzen bzw. -lösungen und die einzelnen Fraktionen des abgeschmolzenen Kristalls aus den einzelnen Stufen in entsprechenden Gefässen gespeichert werden. Sie kann aber auch in einer Reihe hintereinandergeschalteter Kristallisationsapparate durchgeführt werden.

Das zur Bildung des Flüssigkeitsfilms in den Kristallisationsapparat eingeleitete Gas kann gemäss einem Unteranspruch des Verfahrens, insbesondere in den Fällen, bei denen das Gas mit umweltbelästigenden Stoffen beladen wird, falls erforderlich, nach vorheriger Kühlung und Abscheidung des kondensierbaren Anteils im Kreislauf gefördert werden. Wird aus einem leichtflüchtigen Lösungsmittel heraus kristallisiert, so wird das Restkristall zumindest der letzten Stufe vor dem Abschmelzen im Vakuum getrocknet.

Das erfindungsgemässe Verfahren zeichnet sich gegenüber bekannten vergleichbaren Kristallisationsverfahren durch eine Reihe von Vorteilen aus:

— Das kristallisierende flüssige Gemisch wird während des Kristallisationsvorgangs nicht umgepumpt und braucht daher auch nicht aufgeheizt zu werden.

— Durch die aufsteigenden Blasen wird im gesamten Apparat das Wachstum einer gleichmässig dicken Kristallschicht erreicht, da der Wärme- und Stoffübergang durch hohe Turbulenzen und dünne Grenzschichtendicken günstig beeinflusst wird.

— Die quasi stehende, nur durch die aufsteigenden Gasblasen bewegte flüssige Phase weist weder in axialer noch in radialer Richtung Konzentrationsunterschiede auf. Dieses ist bei allen bekannten Verfahren, bei denen die zu kristallisierende Flüssigkeit im Kreislauf umgepumpt wird, nicht gegeben. Daher ist eine beliebige Massstabsvergrösserung in axialer Richtung möglich, ohne die Wirksamkeit des Verfahrens zu mindern.

— Das Ausmass der fluiddynamischen Beanspruchung der Kristallschicht kann der Kristallart entsprechend leicht angepasst werden.

— Es lassen sich auch Stoffe kristallisieren, die nur eine geringe Haftung an einer gekühlten Wand aufweisen, da sich die notwendigen Haftkräfte um die Auftriebskräfte verringern und die fluiddynamische Beanspruchung entsprechend angepasst werden kann.

— Das Abfallen von Kristallschichten während des Abschmelzens wird vermieden.

— Das Verfahren lässt sich für eine grosse Anzahl von Stoffen anwenden. Als Beispiele können ohne Anspruch auf Vollständigkeit genannt werden:

Aromatische Kohlenwasserstoffe wie Naphthalin, 1- und 2-Methylnaphthalin, Acenaphthen, Fluoren, Phenanthren, Anthracen, Fluoranthen und Pyren, Phenole wie p-Kresol, 2.6- und 3.5-Dimethylphenol, Cumylphenol und o,o-Diphenol, heterocyclische Stickstoffverbindungen wie Indol und Carbazol, heterocyclische Sauerstoffverbindungen wie Diphenylenoxid, chlorierte Kohlenwasserstoffe wie Dichlorbenzol sowie Paraffine ab $C_{17}$.

Die folgenden Beispiele sollen das Verfahren näher erläutern, ohne es hierauf zu beschränken.

*Beispiel 1*

Als Kristallisationsrohr wird ein Doppelmantelrohr verwendet, das mit Zulauf und Ablauf für die flüssige Phase und mit Einleitungs- und Austrittsstutzen für das Temperiermedium versehen ist. In der Mitte des Kristallisationsrohres befindet sich ein dünnes Gaseinleitungsrohr mit einem Aussendurchmesser von 6 mm. Das Kristallisationsrohr ist an eine Kälte- und eine Wärmemaschine angeschlossen, die über Regelkreise gesteuert werden.

Rohrdurchmesser, innen: 8,5 cm
Kristallschichtdicke: 1,5 cm

Als Einsatzmaterial wird eine 58%ige (Gew.) Acenaphthenfraktion eingesetzt. Die Kristallisation wird in vier Stufen durchgeführt, mit einem Gasdurchsatz von 30 l/h Stickstoff. Der Gasblasendurchmesser vergrössert sich durch Koaleszenz. Die Acenaphthenkonzentration des Kristalls aus der vierten Stufe beträgt 98,6 Gew.-% bei einer Ausbeute von 76,25 Gew.-%.

Bei Verwendung einer Abtriebsstufe zur Ausbeutesteigerung (d. h. die Zugabe des Einsatzmaterials erfolgt in der zweiten Stufe, das Reinkristall wird aus der fünften Stufe gewonnen) enthält der Rückstand der ersten Stufe, der aus dem System ausgeschleust wird, nur noch 14,0 Gew.-% Acenaphthen, während das Reinkristall der fünften Stufe 98,6 Gew.-% Acenaphthen enthält. Die Ausbeute des Prozesses beträgt dadurch 87,2 Gew.-%, bezogen auf den Acenaphthengehalt im Einsatzstoff.

*Beispiel 2*

Die fraktionierte Kristallisation einer 94%igen (Gew.) Acenaphthenfraktion wird in einem Apparat durchgeführt, der ähnlich einem Rohrbündelwärmeaustauscher aufgebaut ist und bei dem die parallel angeordneten, senkrecht installierten Kristallisationsrohre die gleichen geometrischen Abmessungen wie das in Beispiel 1 verwendete Einzelrohr haben.

Zum Vergleich wird die einstufige fraktionierte Kristallisation mit und ohne Einleitung von Stickstoffgasblasen durchgeführt. Bei gleicher Temperaturführung und gleicher Art der Fraktionierung erhält man bei einer Ausfrierrate von 95 Gew.-% für die einstufige fraktionierte Kristallisation folgendes Ergebnis:

| Stickstoffstrom pro Rohr (l/h) | Zeitdauer für die Auskristallisation (min) | Konzentration des Reinkristalls (Gew.-%) |
|---|---|---|
| 0 | 110 | 98,2 |
| 30 | 65 | 98,8 |

*Beispiel 3*

Die Kristallisation einer 40%igen (Gew.) Pyrenfraktion wird in einem Rohrbündelwärmeaustauscher durchgeführt. Die Kristallisationsrohre haben einen Durchmesser von 9,1 cm, die Kristallschichtdicke beträgt maximal 8 mm. Zur Kristallisation wird als Lösungsmittel Schwerbenzol verwendet. Das Mischungsverhältnis beträgt 80 Gew.-Teile Pyrenfraktion und 20 Gew.-Teile Schwerbenzol. Das eingesetzte Schwerbenzol hat einen Siedebeginn bei 160° C.

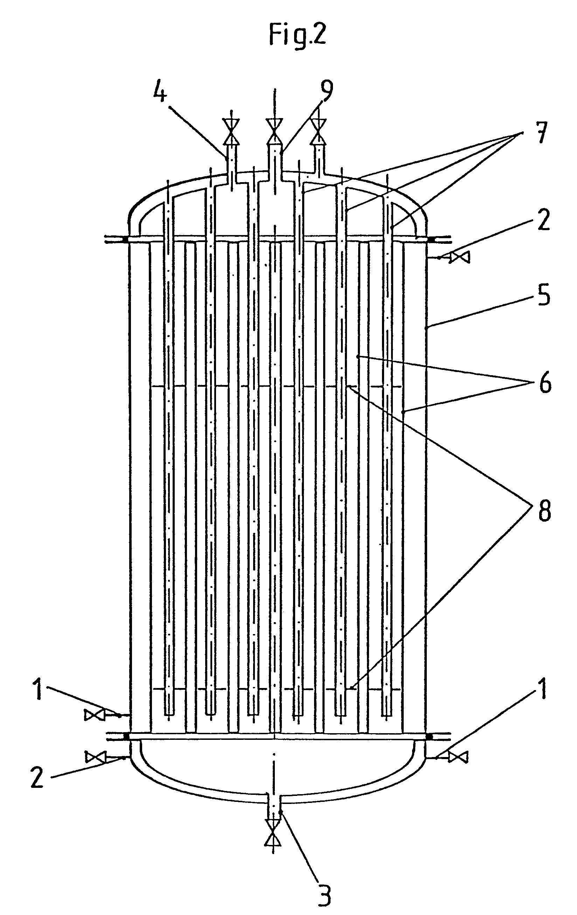

Der Aufbau des Kristallisationsapparates entspricht der in Fig. 2 angegebenen Anordnung.

Die flüssige Lösung wird in den Kristallisationsapparat eingefüllt und so weit abgekühlt, bis die Temperatur des Lösungsmittels in der Mitte eines jeden Kristallisationsrohres 27° C erreicht hat. Dabei sollte die Temperatur im Kühlkreislauf nicht unter 21° C abgesenkt werden. Während der Zeit der Abkühlung wird Stickstoff über die Gaseinleitungsrohre dem Kristallisationsapparat im unteren Teil zugeführt und perlt durch die Lösung. Der Gasvolumenstrom je Einzelrohr wird von anfänglich 80 l/h auf 10 l/h am Ende der Kristallisation abgesenkt. Anschliessend wird das noch flüssige, mit Verunreinigungen beladene Lösungsmittel über das am Boden des Apparates befindliche Ventil abgelassen. Durch vorsichtiges Erwärmen und gleichzeitige Reduzierung des Druckes auf 500 mbar werden Restverunreinigungen und das Lösungsmittel aus der Kristallschicht entfernt. Oberhalb der Temperatur von 145° C wird der Druck in dem Kristallisationsapparat wieder auf Normaldruck angehoben. Die eventuell im Boden des Kristallisators angesammelte Flüssigkeit wird abgelassen. Bei weiterer Temperaturerhöhung erhält man ein Pyren mit mindestens 90%iger (Gew.) Reinheit.

*Beispiel 4*

Die Kristallisation von 50%igem (Gew.) Anthracen wird in einem Apparat durchgeführt, der ähnlich einem Rohrbündelwärmeaustauscher aufgebaut ist (Fig. 2). Die Anthracenfraktion wird mit Acetonphenon als Lösungsmittel gemischt. Mischungsverhältnis: 2 Gew.-Teile Lösungsmittel auf 1 Gew.-Teil Anthracenfraktion. Die Kristallisationsrohre haben einen Innendurchmesser von 11,5 cm, die Kristallschichtdicke beträgt maximal 5 mm.

Die Gasaustrittsleitung ist über eine zwischengeschaltete Kühlfalle an eine Vakuumpumpe angeschlossen. Die Anordnung der Gaseinleitungsröhrchen sowie der Kühl- und Heizkreisläufe entsprechen dem in den Beispielen 1 und 2 erläuterten Aufbau. Die flüssige Lösung wird in den Kristallisationsapparat eingefüllt und so weit abgekühlt, dass die Temperatur des Lösungsmittels in der Mitte jedes Kristallisationsrohres 27° C beträgt. Dabei sollte die Temperatur im Kühlkreislauf nicht unter 21° C abgesenkt werden. Während der Zeit der Abkühlung wird Stickstoff über die Gaseinleitungsrohre dem Kristallisationsapparat im unteren Teil zugeführt und perlt durch die Lösung. Der Gasvolumenstrom je Einzelrohr wird von 100 auf 10 l/h am Ende der Kristallisation vermindert.

Anschliessend lässt man das mit Verunreinigungen beladene Lösungsmittel über das am Boden befindliche Ventil ablaufen. Über den Heizkreislauf erhöht man nun die Temperatur der an der Wand befindlichen Kristallschicht, gleichzeitig wird über die Gasaustrittsleitung der Druck im Kristallisationsapparat auf 500 mbar eingestellt. Oberhalb einer Temperatur von 211° C wird der Druck wieder auf Normaldruck angehoben. Die im Boden des Apparates angesammelte Flüssigkeit wird abgelassen.

Das bei weiterer Temperaturerhöhung abschmilzende Anthracen hat eine Reinheit von mindestens 95 Gew.-% und ist frei von Lösungsmitteln.

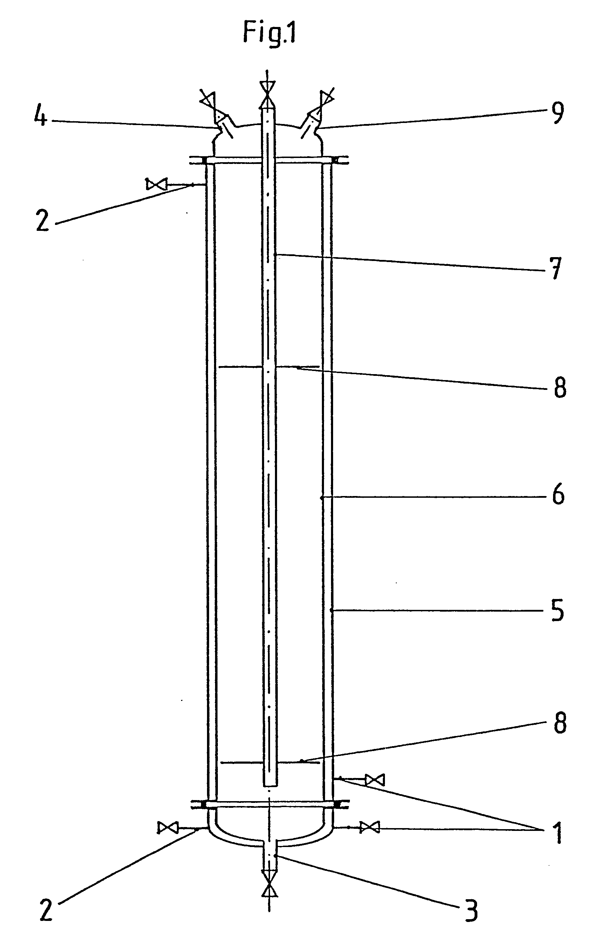

Die Vorrichtung zur Durchführung des Verfahrens besteht in ihrer einfachsten Form, wie in Fig. 1 dargestellt, aus einem senkrecht angeordneten Kristallisationsrohr 6 mit einem Mantelrohr 5, das mit Stutzen 1 und 2 für den Temperiermitteleinbzw. -austritt versehen ist. Am unteren Ende des Kristallisationsrohres 6 befindet sich ein Stutzen 3 für den Zu- und Ablauf der flüssigen Phase. Der Zulauf kann auch über einen am Kopf des Kristallisationsrohres 6 befindlichen Stutzen 4 erfolgen. In die Mitte des Kristallisationsrohres ragt von oben ein Gaseinleitungsrohr 7 bis in den unteren Teil hinein, das mit Stiften 8 zentriert wird. Das eingeleitete Gas entweicht durch das Gasaustrittsrohr 9 am Kopf des Kristallisationsrohres 6. Es kann auch über einen Kondensator und/oder Wäscher im Kreislauf geführt werden. Die Kreislaufleitung kann ggf. noch mit einem Vakuumanschluss versehen sein.

In einer besonders vorteilhaften Vorrichtungsform wird ein senkrecht installierter Rohrbündelwärmetauscher verwendet, wie in Fig. 2 dargestellt. Die Rohre 6 dienen als Kristallisationsrohre und sind von einem Mantelrohr 5 umschlossen. Das Gas wird über mittig in den einzelnen Kristallisationsrohren 6 mit Zentrierstiften 8 fixierte Gaseinleitungsrohre 7 eingeleitet und entweicht über das Gasaustrittsrohr 9 am Kopf des Wärmetauschers. Die flüssige Phase wird über den am Kopf oder am Boden des Wärmetauschers befindlichen Stutzen 4 bzw. 3 in die Kristallisationsrohre 6 gepumpt und kann über den Stutzen 3 wieder abgelassen werden.

Es entstehen bei der beschriebenen Anordnung der Gaseinleitungsrohre 7 keine Probleme, da diese Anordnung selbstregulierend wirkt: Die Kristallisation erfolgt bevorzugt in den Rohren, in denen die Gasströmung besonders stark ist. Dies führt aber auch zu einem frühzeitigen Zusetzen der Gasaustrittsöffnung, wodurch die Gasströmung in den noch weniger stark zukristallisierten Rohren erhöht wird und damit die Kristallisationsgeschwindigkeit beschleunigt.

Der optimale Innendurchmesser der Kristallisationsrohre ist von der Konzentration des zu kristallisierenden Stoffes in der flüssigen Phase abhängig. Er sollte so bemessen sein, dass ein Optimum zwischen der Menge des auskristallisierten Stoffes und der mittleren Kristallisationsgeschwindigkeit erreicht wird. Wird ein von aussen gekühltes Rohr als Kristallisationsrohr verwendet, so errechnet sich der optimale Durchmesser der Rohre nach folgender Gleichung:

$$d = 2s \frac{1 + \sqrt{1 - C_{Krist}}}{C_{Krist}}$$

mit d = Rohrinnendurchmesser

s = optimale Dicke der Kristallschicht

$C_{Krist}$ = Mengenanteil der kristallisierbaren Komponenten im Einsatzstoff.

Die Dichte der Kristallschicht wird in der Regel durch wirtschaftliche Faktoren wie Energiekosten, Raum-Zeit-Ausbeute usw. festgelegt und muss für jedes Stoffsystem optimiert werden. Zur Ermittelung der optimalen Kristallschichtdicke wird in einem Laborversuch der mittlere Wärmedurchgangskoeffizient in Abhängigkeit von der Kristallschichtdicke bestimmt. Die Schichtdicke bei verschiedenen Ausfrierraten wird entweder aus der Stoffbilanz errechnet oder direkt gemessen. Aus der logarithmischen mittleren Temperaturdifferenz während der Kristallisation, der Wärmeaustauschfläche des Kristallisationsapparates sowie dem mittleren Wärmestrom lässt sich nach den bekannten Gleichungen der Wärmeübertragung der Wärmedurchgangskoeffizient k errechnen. Aus wirtschaftlichen Gründen sollte ein mittlerer Wärmedurchgangskoeffizient von 25 W/m²K nicht unterschritten werden. Dieser Wert wird in der Regel für Kristallschichtdicken erreicht, die kleiner als 20 mm sind.

Als weitere Ausführungsform für geeignete Kristallisationsapparate sind plattenförmige Wärmetauscher verwendbar, die Kristallisationsräume begrenzen bei denen die Gasblasen aus den Gaseinleitungsrohren zwischen jeweils zwei benachbarten Wärmetauscherplatten von unten nach oben hindurchgeleitet werden. Die Platten können dabei sowohl senkrecht als auch von der senkrechten Achse abgeneigt installiert werden.

## Patentansprüche

1. Verfahren zur Stofftrennung eines flüssigen Gemisches durch fraktionierte Kristallisation durch Abscheiden einer Kristallschicht an der Wandung einer gefüllten Kristallisationszone, wobei die flüssige Phase indirekt gekühlt wird und der Stoffübergang aus dünnen Grenzschichten erfolgt, durch Entfernen der restlichen Flüssigkeit und Abschmelzen der Kristallschicht in einer oder mehreren Stufen, dadurch gekennzeichnet, dass die dünnen Grenzschichten ohne Umpumpen der flüssigen Phase durch am Boden des Kristallisationsbehälters eingeleitete Gasblasen erzeugt werden, die während ihres Aufstiegs durch die flüssige Phase möglichst dicht an den wärmeabführenden Oberflächen entlangstreichen.

2. Verfahren nach Anspruch 1, dadurch gekennzeichnet, dass die Kristallisation in aus mehreren Stufen bestehenden Zyklen durchgeführt wird, wobei die Restschmelze bzw. -lösung und die einzelnen Fraktionen des abgeschmolzenen Kristalles der ersten Abschmelzstufen mit geringerer Reinheit eines Zyklus jeweils dem Einsatzprodukt der Stufe des nachfolgenden Zyklus mit der entsprechenden Reinheit zugeführt werden und das Restkristall als Einsatz für die folgende Stufe des gleichen Zyklus dient.

3. Verfahren nach den Ansprüchen 1 und 2, dadurch gekennzeichnet, dass zum Abschmelzen des Restkristalls die ggf. erwärmte Restschmelze bzw. -lösung des vorangegangenen Zyklus mit der gleichen mittleren Reinheit verwendet wird.

4. Verfahren nach den Ansprüchen 1 bis 3, dadurch gekennzeichnet, dass das Gas, nachdem es ggf. gekühlt und von dem kondensierbaren Anteil befreit wurde, zurückgeführt wird.

5. Verfahren nach den Ansprüchen 1 bis 4, dadurch gekennzeichnet, dass bei einer Kristallisation aus leichtflüchtigen Lösungsmitteln das Restkristall vor dem Abschmelzen im Vakuum getrocknet wird.

6. Vorrichtung zur Durchführung des Verfahrens nach den Ansprüchen 1 bis 5, bestehend aus einem senkrecht angeordneten Rohrwärmetauscher mit einem oder mehreren, von aussen gekühlten Rohren und Ein- und Austrittsstutzen für die flüssige Phase und das Temperiermittel, dadurch gekennzeichnet, dass in die als Kristallisationsrohre dienenden Rohre (6) mittig mit Zentrierstiften (8) fixierte Gaseinleitungsrohre (7) bis in den unteren Teil hineinragen und der Kopf des Wärmetauschers mit einem Gasaustrittsrohr (9) versehen ist, an das ggf. über eine Gasbehandlungsstufe eine Vakuumleitung angeschlossen werden kann.

7. Vorrichtung nach Anspruch 5, dadurch gekennzeichnet, dass der Innendurchmesser der Kristallisationsrohre (6) nicht grösser ist als

$$d = 2s \frac{1 + \sqrt{1 - C_{Krist}}}{C_{Krist}}$$

wobei d der Rohrinnendurchmesser, s die optimale Dicke der Kristallschicht und $C_{Krist}$ der Mengenanteil der kristallisierbaren Komponente im Einsatzstoff bedeuten.

8. Vorrichtung zur Durchführung des Verfahrens nach den Ansprüchen 1 bis 5, bestehend aus einem Plattenwärmetauscher, dessen Platten senkrecht oder zur senkrechten Achse geneigt angeordnet sind, dadurch gekennzeichnet, dass in den von Wärmetauscherplatten begrenzten Kristallisationsräumen Gaseinleitungsrohre so fixiert sind, dass die eingeleiteten Gasblasen jeweils zwischen den benachbarten Wärmetauscherplatten von unten nach oben hindurchgeleitet werden.

## Claims

1. A method for separation of substances of a liquid mixture by fractional cristallization comprising precipitating a cristal layer on the wall of a filled crystallization zone, wherein the liquid phase is cooled indirectly and the mass transfer accurs from thin boundary layers, removal of the residual liquid phase and melting down the crystal layer in one or more stages, characterized by producing the thin boundary layers without recyclin of the liquid phase by gas bubbles introduced at the bottom of the crystallizing vessel, said gas bubbles gliding during their ascent in the liquid phase as closely as possible along the heat-dissipating surfaces of the vessel.

2. A method as claimed in Claim 1, characterized by carrying out the crystallization in cycles consisting of a plurality of stages, wherein the residual melt or solution and the single fractions of the down melted crystal from the first melting-down stages of one cycle with lower purity are each supplied to the feedstock used in the stage with the corresponding purity of the following cycle, and the residual crystals serve as charge for the following stage of the same cycle.

3. A method as claimed in Claims 1 and 2, characterized by using the possibly heated residual melt or solution of the previous cycle with the same mean purity for melting down of the residual crystal.

4. A method as claimed in Claims 1 to 3, characterized by returning the gas, if necessary after cooling and setting free from the condensable portion.

5. A method as claimed in Claims 1 to 4, characterized by drying the residual crystal in vacuo in the case of crystallization from light volatile solvents prior to the melting down.

6. An apparatus for carrying out the method as claimed in Claims 1 to 5, comprising a vertically mounted tube heat exchanger with one or more externally cooled pipes and inlet and outlet connections for the liquid phase and the tempering medium, characterized by gas-inlet pipes (7) extending into the lower portion of the pipes (6) serving as crystallization pipes and being fixed in the middle of the crystallization pipes with centering pins (8), and the head of the heat exchanger being provided with a gas-outlet pipe (9), wich can be connected to a vacuum line optionally by using a gas-cleaning device.

7. An apparatus as claimed in Claim 6, characterized by an inside diameter of the crystallization pipes not larger than

$$d = 2s \frac{1 + \sqrt{1 - C_{Krist}}}{C_{Krist}}$$

wherein d is the inside diameter of the pipe, s the optimal thickness of the crystal layer and $C_{Krist}$ the portion of the crystallizable component in the feedstock.

8. An apparatus for carrying out the method claimed in Claims 1 to 5, comprising a plate heat exchanger, whose plates are mounted vertically or obliquely to the vertical axis, characterized by gas-inlet pipes fixed in the crystallization spaces limited by heat exchanger plates so that the introduced gas bubbles are passed though from the bottom to the top between the neighboring heat exchanger plates.

**Revendications**

1. Procédé pour la séparation de matières d'un mélange liquide par cristallisation fractionnée, par séparation d'une couche de cristal sur la paroi d'une zone de cristallisation garnie, la phase liquide étant refroidie indirectement et le transfert de matière s'effectuant à partir de couches limites minces, par élimination du liquide résiduel et par fusion de la couche de cristal en une ou plusieurs étapes, caractérisé par le fait que les minces couches limites sont produites, sans transvasement par pompage de la phase liquide, par des bulles de gaz qui sont introduites au fond du récipient de cristallisation et qui, lors de leur ascension en traversant la phase liquide, longent le plus près possible les surfaces dissipant la chaleur.

2. Procédé selon la revendication 1, caractérisé par le fait que la cristallisation a lieu par cycles comprenant plusieurs étapes, le bain de fusion résiduel ou la solution et les fractions isolées des cristaux liquéfiés des premières étapes de fusion, de moins grande pureté d'un cycle, étant respectivement ajoutés au produit de la charge de l'étape du cycle suivant, de pureté correspondante, et le cristal résiduel sert de charge pour l'étape suivante du même cycle.

3. Procédé selon les revendications 1 et 2, caractérisé par le fait que, en vue de la fusion du cristal résiduel, on utilise le bain de fusion résiduel ou la solution du cycle précédent, de même pureté moyenne, qui peut être échauffé.

4. Procédé selon les revendications 1 à 3, caractérisé par le fait que le gaz est réintroduit après qu'il a été éventuellement refroidi et débarrassé de la part de son contenu pouvant être condensée.

5. Procédé selon les revendications 1 à 4, caractérisé par le fait que, lors d'une cristallisation à partir de solvants aisément volatils, le cristal résiduel est séché sous vide avant la fusion.

6. Dispositif pour la mise en œuvre du procédé selon les revendications 1 à 5, constitué par un échangeur de chaleur tubulaire placé verticalement et comportant un ou plusieurs tubes qui sont rafraîchis du dehors et des raccords d'entrée et de sortie pour la phase liquide et l'agent de températion, caractérisé par le fait que des tubes (7) d'admission du gaz sont fixés par des goujons de centrage (8) au centre des tubes (6) et pénètrent jusque dans la partie inférieure de ces tubes (6) qui servent de tubes de cristallisation, la tête de l'échangeur de chaleur étant munie d'un tube (9) de sortie de gaz, une conduite reliée à une source de vide pouvant être éventuellement raccordée au tube (9) par l'intermédiaire d'un étage de traitement du gaz.

7. Dispositif selon la revendication 6, caractérisé par le fait que le diamètre intérieur des tubes de cristallisation (6) n'est pas supérieur à

$$d = 2s \frac{1 + \sqrt{1 - C_{Krist}}}{C_{Krist}}$$

d étant le diamètre intérieur des tubes, s l'épaisseur optimale de la couche de cristal et $C_{Krist}$ la part quantitative des composants cristallisables dans la matière constituant la charge.

8. Dispositif pour la mise en œuvre du procédé selon les revendications 1 à 5 consistant en un échangeur de chaleur à plaquettes, dont les plaquettes sont placées verticalement ou inclinées par rapport à l'axe vertical, caractérisé par le fait que, dans les chambres de cristallisation délimitées par des plaquettes d'échange thermique, des tubes d'admission du gaz sont fixés de telle sorte que les bulles de gaz introduites soient, à chaque fois, dirigées de part en part et de bas en haut entre les plaquettes voisines d'échange thermique.

# Fig.1

## Fig.2